# EUROPÄISCHE PATENTSCHRIFT

(11) **EP 2 492 189 B1**
(45) Veröffentlichungstag und Bekanntmachung des Hinweises auf die Patenterteilung: **11.05.2016**
(21) Anmeldenummer: 12156783.8
(22) Anmeldetag: 24.02.2012
(51) Int. Cl.: B64C 1/14, B64C 27/04, B64D 7/00

(54) **Beobachtungskanal und Hubschrauberkabine**
Observation channel and helicopter cabin
Canal d'observation et cabine d'hélicoptère

(30) Priorität: 28.02.2011 CH 3462011
(43) Veröffentlichungstag der Anmeldung: 29.08.2012
(73) Patentinhaber: Marenco Swisshelicopter AG, 8753 Mollis (CH)
(72) Erfinder: Stucki, Martin, 8330 Pfäffikon (CH)
(74) Vertreter: Schneider Feldmann AG Patent- und Markenanwälte

(56) Entgegenhaltungen:
- WO-A1-2009/051711
- DE-A1- 3 629 838
- US-A- 2 942 811
- US-A- 3 572 615
- D. Kerr: "Instructions for continued airworthiness - Enlarged Vertical Reference Window AS 350 / AS 355", , 13. Juni 2006 (2006-06-13), Seiten 1-29, XP055152450, Gefunden im Internet: URL:ThirdPartyObservations [gefunden am 2013-06-03]

## Beschreibung

### Technisches Gebiet

Die vorliegende Erfindung beschreibt einen Beobachtungskanal und eine Hubschrauberkabine mit einem Beobachtungskanal.

### Stand der Technik

Die Sicht des Piloten unter ein Drehflügelflugzeug oder einen Drehflügler, insbesondere einen Hubschrauber oder Helikopter, ist in einigen Situationen von sehr grosser Bedeutung.

Um Lasten mittels eines Hubschraubers aufnehmen zu können, ist es erwünscht, den Helikopter in eine vertikale Lage über die Last zu manövrieren. Die Position des Lasthakens, welcher mit dem Lastenseil an der Lastenklinke des Helikopters befestigt ist, sollte vertikal möglichst genau über der Stelle der Last gehalten werden, um die Last ohne horizontale Bewegung anheben zu können. Dies ist sehr wichtig, da eine pendelnde Last unterhalb eines Drehflügelflugzeugs sehr gefährlich werden kann und dies aus Gründen der Flugsicherheit unbedingt vermieden werden muss.

Um die Sicht eines Piloten annähernd vertikal nach unten, unter die Rumpfstruktur eines Helikopters zu gewährleisten werden nach aussen gewölbte Kunstglastüren auf der rechten Pilotenseite, sogenannte "Bubble-Doors" verwendet, wie beispielsweise in WO2009/051711 beschrieben.
Darin wird eine Glastür beschrieben, welche einfach in einer Seitenwand einer Rumpfstruktur eines Fluggerätes anbringbar ist. Eine Person kann auf einem speziellen Sitz im Bereich der Seitenwand platz nehmen und gemäss einer speziellen Ausführungsform seine Füsse auf einer Fussbodenplatte, im unteren Teil der "bubble door" abstellen. Durch die nach Aussen gewölbte Form der "bubble door" kann ein Beobachter auf dem Sitz sitzend an der Rumpfstruktur des Fluggerätes aussen vorbei teilweise unterhalb die Rumpfstruktur blicken. Der auf dem speziellen Sitz sitzende Passagier greift nicht in die Steuerung des Hubschraubers ein, sondern er beschränkt sich auf die Beobachtung des Raums unterhalb der Rumpfstruktur.

Würde eine "bubble door" in der Tür auf der rechten Pilotenseite angeordnet, wäre es dem, in einem Hubschrauber auf der rechten Seite sitzenden Piloten möglich unter das Drehflügelflugzeug zu blicken.

Neben den "bubble doors" sind in der Kabinenbodenfläche der Rumpfstruktur anbringbare sogenannte "Vertical reference floor windows" bekannt, welche in diversen Grössen für einige Hubschraubermodelle erhältlich sind. Diese Fenster werden in der Kabinenbodenfläche zwischen Pilotensitz und Tür im Bereich der rechten Pilotenseite angebracht. Damit kann der Pilot den vertikalen Abstand des Hubschraubers einschätzen, wobei er an seiner rechten Körperhälfte vorbei durch das Fenster schauen muss.

Mit den heutigen Hilfsmitteln wie Bubble-Door, und "Vertical reference floor windows", ist es dem Piloten möglich, die Unterlast zu sehen. Jedoch sind grosse Oberkörperbewegungen auf dem Pilotensitz erforderlich um den Kopf in die gewölbte Tür oder über das "Vertical reference floor window" zu bewegen. Vor allem bei kurzen Seillängen muss sich der Pilot noch stärker nach rechts beugen, um die Unterlast zu sehen. Die stark nach rechts gebeugte Position des Piloten, welche vom links liegenden kollektiven Blattverstellhebel weggebeugt ist, bedingt eine Verlängerung des kollektiven Blattverstellhebels.

Da der Kopf des Piloten bei Unterlastaufgaben weit nach rechts aus dem Fenster geneigt ist, können die Instrumente welche im Instrumentenpilz mittig eingebaut sind, schlecht, oder nur mit grossen Kopf- und Oberkörperbewegungen überprüft werden.

Sollten beispielsweise elektronische und/oder mechanische Ausfällen der Motorsteuerung auftreten ist der Pilot gezwungen, die Motorparameter über den Gasdrehgriff, welcher auf dem kollektiven Blattverstellhebel sitzt, von Hand zu regeln. Wird nun mit den oben beschriebenen Sicht-Möglichkeiten Unterlast geflogen, umfasst die linke Hand nicht den Gasdrehgriff, was bei einem technischen Motorkontrollproblem einen ganzen Körpereinsatz und natürlich einem Handwechsel, von der kollektiven Blattverstellungsverlängerung zum Gasdrehgriff zur Folge hat.

Während bereits im fehlerfreien Zustand der Motorsteuerung hohe Anforderungen an den Piloten gestellt werden, ist die Flugsicherheit bei oben beschriebenen Ausfällen stark reduziert.

Um die Sicht nach unten zu verbessern hat man sich bislang mit der Anbringung von Spiegeln behelfen müssen, oder aber der Pilot hat sich auf den linken Sitz positioniert, was nicht bei allen Hubschraubermodellen möglich ist und teilweise nur durch einen umfangreichen Umbau und eine Zusatzzertifizierung erreichbar ist. Da die Sicht unter das Luftfahrzeug durch den Kabinenboden, die Kufen, montierte Trittbretter und auch Skis oftmals stark behindert ist, hat die Sichtverbesserung mittels dieser Hilfsmittel auch ihre Grenzen, wobei der Pilot weiterhin deutlich von einer entspannten Sitz- und Steuerposition abweicht.

Weiterhin zeigt die Publikation "Instructions for continued airworthiness - enlarged vertical reference window AS350 / AS355" der Firma Eurocopter Canada Limited einen Beobachtungskanal ähnlicher Art, der aber aussenseitig des Pilotensitzes angebracht ist. Damit erreicht man zwar verbesserte Sichtmöglichkeiten für den Piloten, in Bezug auf die Ergonomie der Helikoptersteuerung allerdings noch immer kein Optimum.

Schliesslich zeigt die US-2942811 ein Flugzeug, das im Passagierbereich eine Sichtluke im Boden aufweist. Das ermöglicht zwar bessere Sichtverhältnisse für die Passagiere, nicht aber für den Piloten.

### Darstellung der Erfindung

Die vorliegende Erfindung hat sich zur Aufgabe gestellt ein Drehflügelflugzeug bereit zu stellen, in welchem die Sicht auf eine Unterlast derart erreicht wird, dass der Sitz- und Steuerkomfort für den Piloten verbessert ist. Eine weitere Aufgabe besteht in der Erreichung einer verbesserten Flugsicherheit, da der Pilot entspannter und ermüdungsärmer Flugmanöver mit Unterlast fliegen kann.

Durch die Ausgestaltung eines Drehflügelflugzeuges mit einem im Kabinenboden angeordneten Beobachtungskanal, welcher zwischen Pilotensitz und Copilotensitz angeordnet ist in Richtung Front des Drehflügelflugzeugs wird diese Aufgabe gelöst, wobei der Pilot ohne grosse Kopfdrehung eine freie Sicht unter das Luftfahrzeug erhält.

Die durch die Erfindung erreichten Vorteile sind im wesentlichen darin zu sehen, dass dem Piloten neben einer direkten, ungehinderten und damit wirklichkeitsgetreuen Ansicht des Raumes unterhalb des Helikopters, zu jeder Zeit eine ergonomische Sitzposition erlaubt ist, welche es dem Piloten ermöglicht, die Blickrichtung ohne Oberkörperbewegung einfach zwischen dem Raum unterhalb des Luftfahrzeuges und den Instrumentenparameter zu wechseln.

Die Position des Piloten ist in den Innenraum des Helikopters geneigt, was wiederum die Steuerorgan-Erreichbarkeit begünstigt und damit die Flugsicherheit erhöht.

Durch die Ausgestaltung des Beobachtungskanals wird eine Sichtmöglichkeit unter den Helikopter geschaffen, wobei die Hauptstruktur und insbesondere der Kabinenboden in seiner Stabilität nicht geschwächt wird. Die Konstruktion des Beobachtungskanals hat eher einen stabilisierenden Einfluss auf die Hauptstruktur.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben.
- Figur 1: zeigt eine Aufsicht auf eine Hubschrauberkabine, wobei der Hauptrotor und der Heckrotor weggelassen wurden, während
- Figur 2: eine perspektivische Teilansicht eines Innenraumes einer Hubschrauberkabine ohne Hauptrotor gemäss Figur 1 zeigt.
- Figur 3: zeigt einen Teil einer Aufsicht auf einen Hubschrauber mit einer geringfügig von der Längsachse abweichenden Schnittlinie A-A, während
- Figur 4: einen Längsschnitt gemäss Schnittlinie A-A aus Figur 3 zeigt.
- Figur 5: zeigt einen detaillierten Längsschnitt gemäss rechteckiger Kennzeichnung in Figur 4.

### Beschreibung

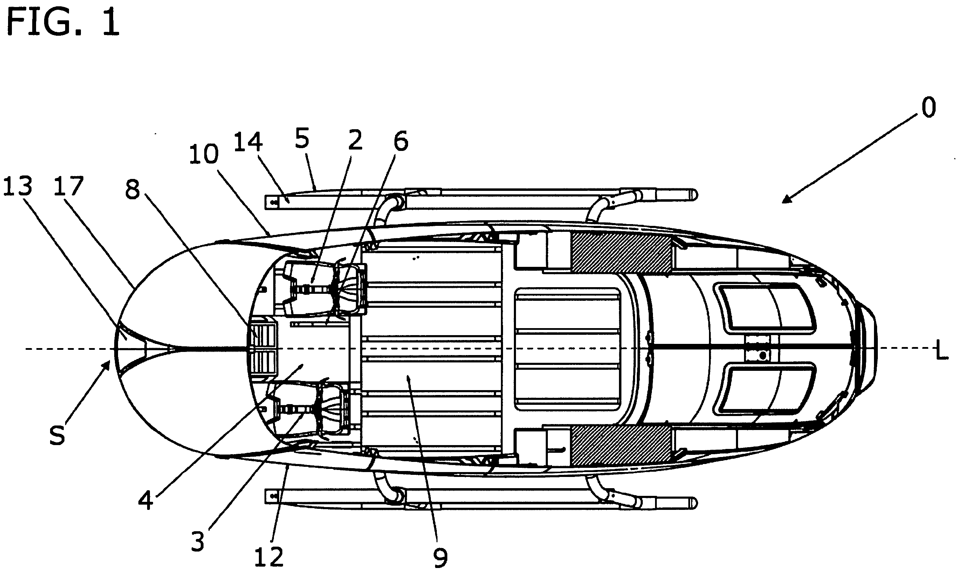

In Figur 1 ist ein Einblick in eine Hubschrauberkabine 0 gezeigt, wobei Hauptrotor und Heckrotor zur Vereinfachung weggelassen wurden. Mit S ist die vordere Spitze S der Hubschrauberkabine 0 bezeichnet und mit L die Längsachse der Hubschrauberkabine 0. Für die vorliegende Erfindung ist die Ausgestaltung im Cockpitbereich und damit nahe der Spitze S der Hubschrauberkabine 0 interessant.

Ein Kabinenboden 9 überdeckt eine Hauptstruktur 13 der Hubschrauberkabine 0. An der tragenden Hauptstruktur 13 sind Kufenrohre 5 und Trittbretter 14 beidseitig angeordnet, sodass die Hubschrauberkabine 0 auf den Kufenrohren 5 abstellbar ist. Die Hauptstruktur 13 ist zumindest teilweise mit einer Aussenhaut 17 umgeben, wodurch eine mindestens teilweise geschlossene Hubschrauberkabine 0 gebildet wird. Neben Kunstglas besteht die Hauptstruktur 13 und die Aussenhaut 17 im Wesentlichen aus Metall- oder Faserverbundwerkstoff-Streben welche die Hubschrauberkabine 0 bilden.

Ein Pilotensitz 2 ist bei Blick in Richtung Spitze S aus dem Innenraum auf der rechten Seite der Hubschrauberkabine 0 angebracht. Auf der entsprechenden linken Seite der Hubschrauberkabine 0 befindet sich der Co-Pilotensitz 3 innerhalb des Cockpits. Wenn in dieser Anmeldung von rechts oder der rechten Seite die Rede ist, ist jeweils die Seite des Pilotensitzes 3 und damit die mit Blick auf die Spitze S aus dem Innenraum definierte rechte Seite gemeint. Zwischen dem Pilotensitz 2 und dem Co-Pilotensitz 3 ist eine Cockpiteingabekonsole 8 angeordnet, welche bei der Steuerung der Hubschrauberkabine 0 bzw. des Hubschraubers bedient wird. Direkt neben dem Pilotensitz 2 und zwar in Richtung Längsachse L vom Pilotensitz 2 beabstandet, befindet sich der kollektive Blattverstellhebel 6, welcher zur kollektiven Verstellung des Anstellwinkels aller Rotorblätter dient.

Eine Pilotensitztür 10 als Teil der Aussenhaut 17 dient als Zugang zum Pilotensitz 2 auf der rechten Seite und entsprechend eine Co-Pilotensitztür 12 auf der linken Seite als Zugang zum Co-Pilotensitz 3.

Um die Sicht unter den Kabinenboden 9 zu erreichen, ist ein Beobachtungskanal 4 vorgesehen, welcher zwischen dem Pilotensitz 2 und dem Co-Pilotensitz 3 angeordnet ist.

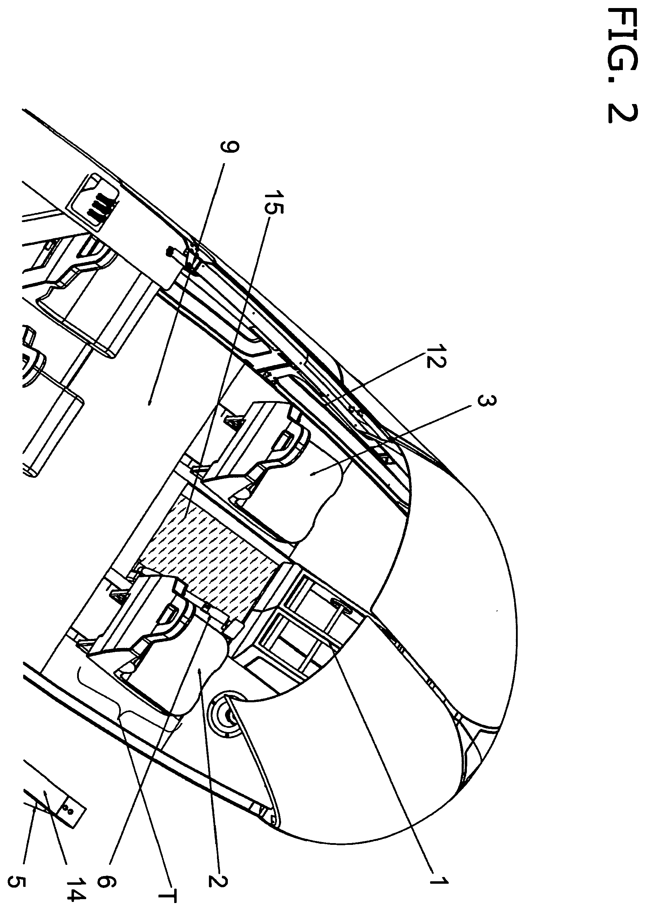

In Figur 2 ist eine Innenscheibe 15 des Beobachtungskanals 4 links vom Pilotensitz 2 versetzt angeordnet erkennbar. Diese Innenscheibe 15 ist vom Innenraum der Hubschrauberkabine 0 zugänglich und transparent ausgestaltet. Die Öffnung des Beobachtungskanals 4 erstreckt sich etwa vom Instrumentenpilz 1 bis zur Rückenlehne des Pilotensitzes 2 und ist vollständig mit der Innenscheibe 15 bedeckt.

Wie in Figur 2 dargestellt ist die Sicht nach unten durch den Beobachtungskanal 4 uneingeschränkt möglich, wobei keine Bauteile wie Kufenrohre 5, Trittbretter 14, Teile der Steuerung oder beispielsweise Verkabelungen unterhalb des Kabinenbodens 9 stören. Ein Pilot auf dem Pilotensitz 2 hat durch leichtes Senken des Kopfes einen grossen Sichtwinkel die Innenscheibe 15 und den gesamten Beobachtungskanal 4 querend unter den Kabinenboden 9. Der Instrumentenpilz 1 im Bereich der Cockpiteingabekonsole 8 kann von einem Piloten auch während der Beobachtung des Geschehens nahezu senkrecht unterhalb des Kabinenbodens 9 ohne grosse Anstrengung bedient werden.

Zum Innenraum der Hubschrauberkabine 0 wird der Beobachtungskanal 4 von der Innenscheibe 15 begrenzt, welche bevorzugt bündig mit der Ebene des Kabinenbodens 9 ist. Die Innenscheibe 15 ist lateral zwischen dem Pilotensitz 2 und dem Co-Pilotensitz 3 angeordnet. Die Länge der Innenscheibe 15 entspricht in Richtung der Längsachse L der Hubschrauberkabine 0 etwa der Tiefe T der Sitzfläche und der Rückenlehne des Pilotensitzes 2.

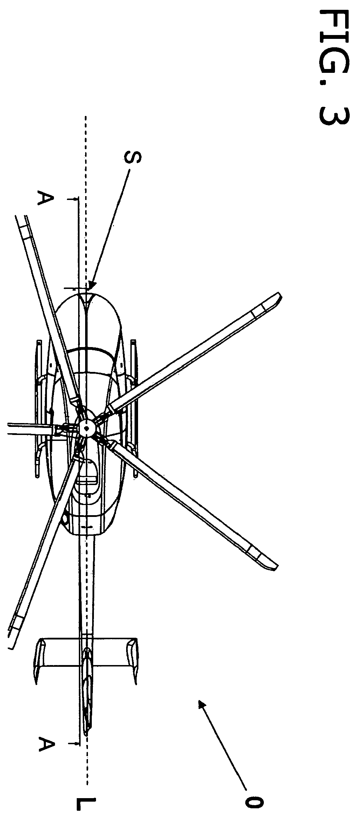

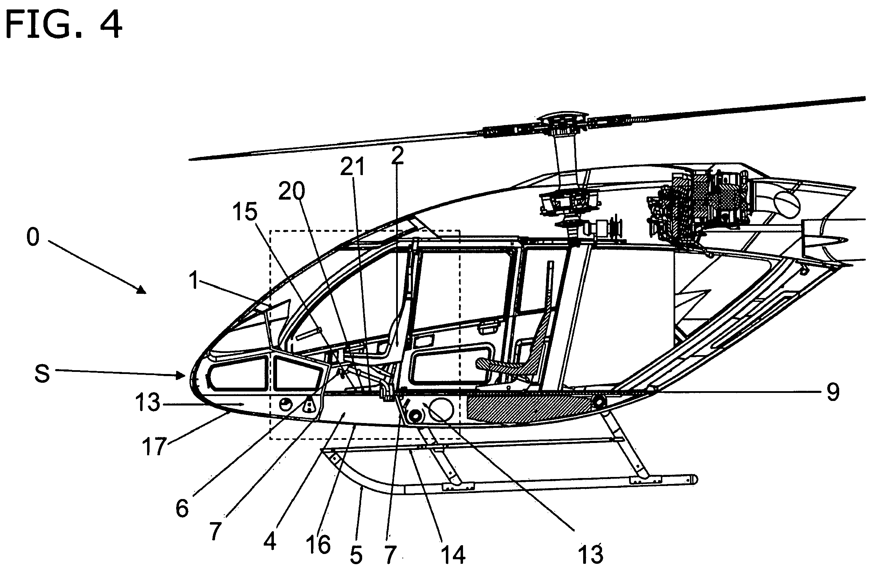

Die Verdeutlichung der Ausgestaltung des Beobachtungskanals 4 erfolgt an einem Längsschnitt gemäss Figur 4, welcher entlang der Schnittlinie A-A in Figur 3 durchgeführt ist.

Der Beobachtungskanal 4 befindet sich in der Hauptstruktur 13 der Hubschrauberkabine 0, die Hauptstruktur 13 vollständig querend. Dabei ist ein entsprechender Raum in der Hauptstruktur 13 ausgespart, in welchen der Beobachtungskanal 4 eingebracht ist.

Die Stabilität der Innenscheibe 15 kann der Bodentragkraft des Kabinenbodens 9 entsprechend ausgebildet sein, damit diese begehbar ist. Die Innenscheibe 15 kann bei Personentransporten zusätzlich durch eine Abdeckung, beispielsweise einen Rollladen 20 oder dergleichen abgedeckt werden. Es ist aber auch vorstellbar die Innenscheibe 15 lösbar befestigt auf der Öffnung des Beobachtungskanals 4 zu lagern, sodass die Innenscheibe 15 durch einen entsprechend geformten Bodeneinsatz 21 ausgetauscht werden kann. Der Bodeneinsatz 21 wäre dann derart ausgeführt, dass er bei Personentransporten ermöglicht, dass 3 Sitze in der vorderen Reihe platziert werden können.

Auf der dem Innenraum der Hubschrauberkabine 0 entgegengesetzten Atmosphärenseite des Beobachtungskanals 4 wird der Beobachtungskanal 4 durch eine Aussenscheibe 16 begrenzt, welche bevorzugt bündig zur Ebene der Aussenhaut 17 der Hauptstruktur 13 ist. Dadurch bleiben die aerodynamischen Eigenschaften der Aussenhaut 17 nahezu unverändert. Der Beobachtungskanal 4 ist damit beidseitig zum Innenraum der Hubschrauberkanine 0 und zur Atmosphäre abgeschlossen ausgebildet.

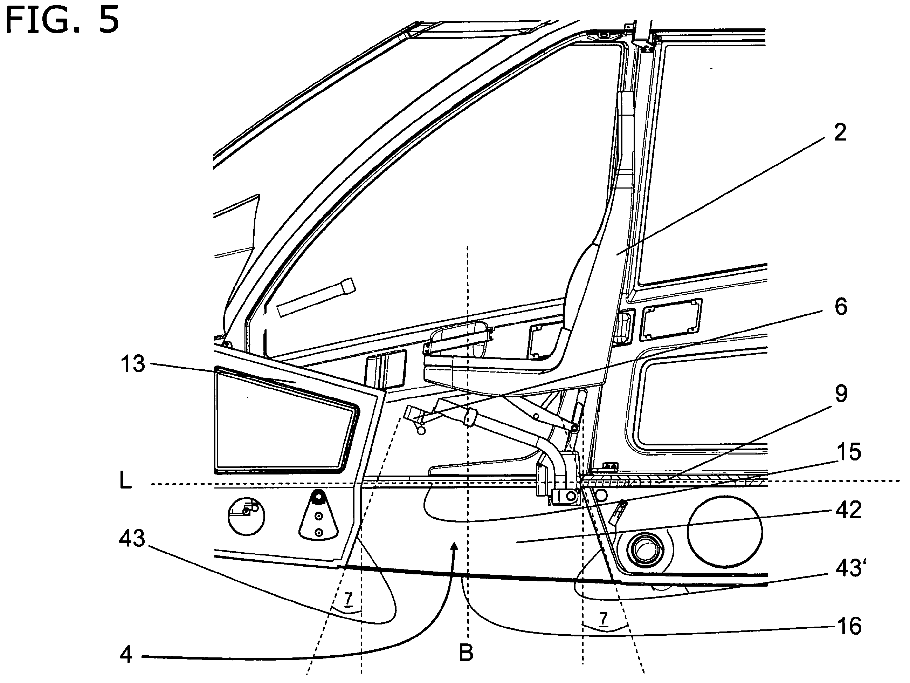

Der Beobachtungskanal 4 wird durch zwei Längswände 42 gebildet, wobei in Figur 5 nur eine Längswand 42 erkennbar ist. Beide Längswände 42 verlaufen mindestens annähernd parallel zur Längsachse L und zueinander.

Eine vordere Querwand 43 und eine hintere Querwand 43' mindestens annähernd senkrecht zur Längsachse L verlaufend, grenzen den Beobachtungskanal 4 nach vorne und hinten in Richtung der Längsachse L gegen die Hauptstruktur 13 ab.

Um die Sichtreferenz auch bei unterschiedlichen Lastenseillängen zu vergrössern, kann mindestens ein Teil mindestens einer der Querwände 43, 43' in einem Öffnungswinkel 7 grösser 0° zwischen einer Beobachtungskanallängsachse B und dem mindestens einen Teil der jeweiligen Querwand 43, 43' angeordnet sein. Insbesondere ist die Wahl eines Öffnungswinkels 7 von mindestens etwa 10° zwischen mindestens einer der Querwände 43, 43' und der Beobachtungskanallängsachse B vorteilhaft. Dies ist in Figur 5 dargestellt. Der Querschnitt des Beobachtungskanals 4 ist damit vom Innenraum bis zur Atmosphärenseite der Hubschrauberkanine 0 entsprechend vergrössert.

Die hier dargestellten Figuren zeigen die Längswände 42 und die Querwände 43, 43' jeweils als Teil der Hauptstruktur 13, welche zur Ausbildung des Beobachtungskanals 4 entsprechend geformt sind. Es ist aber auch möglich in eine Aussparung der Hauptstruktur 13 einen Beobachtungskanal 4 einzubringen. Sodass der Beobachtungskanal 4 aus der Aussparung in der Hauptstruktur 13 entfernbar gelagert ist.

Um eine optimale Sicht zu ermöglichen müssen Innenscheibe 15 und Aussenscheibe 16 transparent ausgeführt sein. Um zusätzlich einen gewissen Vergrösserungseffekt zu erzielen, kann die Innenscheibe 15 und/oder die Aussenscheibe 16 konkav oder konvex ausgeführt sein.
Im Weiteren können Spiegel zur Beobachtung und Überwachung der Stellung des Lasthakens ohne aufwändige Spiegelaufnahmen direkt in den Beobachtungskanal 4 eingebracht und dort befestigt werden. Durch diese Anordnung von Spiegeln werden die aerodynamischen Eigenschaften des Luftfahrtzeuges nicht beeinträchtigt, da diese von den Längswänden 42 und Querwänden 43, 43' vollständig umgeben sind.

Die Sichtfensterlänge 4 ist je nach Bedarf longitudinal in Richtung der Kabine verlängerbar.

Durch den Beobachtungskanal 4 wird eine vertikale Sichtreferenz unterhalb das Luftfahrtzeug erhalten. Sichteinbussen auf die Unterlast, welche bei Verwendung von "Bubble-Door"-Vorrichtungen durch Kufenrohre 5, wie auch Trittbretter 14 öfters vorkommen, sind ausgeschlossen.

Der Beobachtungskanal 4 ist frei von jeglichen Strukturteilen 13 und/oder Steuergestängen. Durch die uneingeschränkte Sicht durch den Beobachtungskanal 4, wird die Unterlast, oder Dergleichen, welche am Lasthaken mit dem längenunabhängigen Lastenseil verbunden ist, ungehindert gesehen.

Der Pilot, welcher auf dem Pilotensitz 2 das Luftfahrzeug pilotiert, kann beim Gebrauch des Beobachtungskanals 4 eine ergonomische Position vor dem Instrumentenpilz 1 einnehmen, auf welchem die Flug- und Motorinstrumente platziert sind. Dadurch, dass der Beobachtungskanal 4 auf der linken Seite des Pilotensitzes 2 eingelassen ist, ist bei Unterlasteinsätzen die Kopfdrehung demnach nach links in die Mitte des Helikopters geneigt, auf die Seite des kollektiven Blattverstellhebels 6, was dem Piloten auf dem Pilotensitz 2 das Steuern mit der linken Hand stark vereinfacht und zusätzlich die Flugsicherheit erhöht. Dadurch, dass der Kopf bei Unterlastmissionen genau vor den Fluginstrumenten platziert ist, genügt eine reine Augenbewegung um die Unterlast und/oder die Instrumentendaten abzulesen, was weiter für zusätzliche Flugsicherheit sorgt.

### Bezugszeichenliste

- 0: Hubschrauberkabine
- 1: Instrumentenpilz
- 2: Pilotensitz
- 3: Co-Pilotensitz
- 4: Beobachtungskanal
15 Innenscheibe
16 Aussenscheibe
42 Längswand
43, 43' Querwand (vordere/ hintere)

- 5: Kufenrohr
- 6: Kollektiver Blattverstellhebel
- 7: Öffnungswinkel
- 8: Cockpiteingabekonsole
- 9: Kabinenboden
- 10: Pilotensitztür
- 12: Co-Pilotensitztür
- 13: Hauptstruktur
- 14: Trittbrett
- 17: Aussenhaut
- 20: Rolladen
- 21: Bodeneinsatz
- S: Spitze
- L: Längsachse
- T: Tiefe

## Patentansprüche

1. Hubschrauberkabine (0) mit einem Beobachtungskanal (4) in einer Hauptstruktur (13) der Hubschrauberkabine (0), wobei der Beobachtungskanal (4) die Hauptstruktur (13) von einem Kabinenboden (9) bis zu einer Aussenhaut (17) der Hubschrauberkabine (0) vollständig querend angeordnet ist, und wobei eine Öffnung des Beobachtungskanals (4) zum Innenraum mit einer Innenscheibe (15) und eine Öffnung des Beobachtungskanals (4) zur Atmosphäre mit einer Aussenscheibe (16) lösbar oder unlösbar verbunden bedeckt ist,
und mit einem Pilotensitz (2) und einem Co-Pilotensitz (3), welche in Querrichtung der Hubschrauberkabine (0) nebeneinander angeordnet sind, **dadurch gekennzeichnet, dass** der Beobachtungskanal (4) zwischen dem Pilotensitz (2) und dem Co-Pilotensitz (3) angeordnet ist, und Wände des Beobachtungskanals (4) Teile der Hauptstruktur (13) bilden.

2. Hubschrauberkabine (0) nach Anspruch 1, wobei die Innenscheibe (15) bündig zu einer Ebene des Kabinenbodens (9) angeordnet ist.

3. Hubschrauberkabine (0) nach Anspruch 1, wobei sich die Öffnung des Beobachtungskanals (4) zum Innenraum entlang der Längsachse (L) und die Innenscheibe (15) mindestens annähernd von einem Instrumentenpilz (1) bis zu einer Rückenlehne des Pilotensitzes (2) erstrecken.

4. Hubschrauberkabine (0) nach Anspruch 1, wobei der Beobachtungskanal (4) durch eine vordere Querwand (43) und eine hintere Querwand (43') mindestens annähernd senkrecht zu einer Längsachse (L) verlaufend gegen die Hauptstruktur 13 abgegrenzt ist.

5. Hubschrauberkabine (0) nach Anspruch 4, wobei mindestens ein Teil der vorderen Querwand (43) und/oder der hinteren Querwand (43') einen Öffnungswinkel (7) von mindestens annähernd 10° zwischen einer Beobachtungskanallängsachse (B) und dem mindestens einen Teil der jeweiligen Querwand (43, 43') aufweist.

6. Hubschrauberkabine (0) nach Anspruch 1, wobei die Innenscheibe (15) von einer Abdeckung, beispielsweise von einem Rollladen (20) zeitweise abgedeckt ist.

7. Hubschrauberkabine (0) nach Anspruch 1, wobei die Innenscheibe zeitweise durch einen Bodeneinsatz (21) ersetzt ist.

8. Hubschrauberkabine (0) nach Anspruch 1, wobei die Aussenscheibe (16) bündig zu einer Ebene der Aussenhaut (17) der Hauptstruktur (13) angeordnet ist, wodurch die aerodynamischen Eigenschaften der Aussenhaut (17) nahezu unverändert bleiben.

## Claims

1. A helicopter cabin (0) with an observation port (4) in a primary structure (13) of the helicopter cabin (0), wherein the observation port (4) is arranged such that it completely traverses the primary structure (13) from a cabin floor (9) to a skin (17) of the helicopter cabin (0), and wherein an opening of the observation port (4) toward the interior is separably or inseparably connected to and covered by an inner window pane (15) and an opening of the observation port (4) toward the atmosphere is separably or inseparably connected to and covered by an outer window pane (16), and with a pilot's seat (2) and a copilot's seat (3), which are arranged adjacent to one another in the lateral direction of the helicopter cabin (0),
**characterized in that** the observation port (4) is arranged between the pilot's seat (2) and the copilot's seat (3), and **in that** the walls of the observation port (4) form part of the primary structure (13).

2. The helicopter cabin (0) according to claim 1, wherein the inner window pane (15) is arranged flush with a plane of the cabin floor (9).

3. The helicopter cabin (0) according to claim 1, wherein the opening of the observation port (4) extends toward the interior along the longitudinal axis (L) and the inner window pane (15) extends at least approximately from an instrument panel (1) to a backrest of the pilot's seat (2).

4. The helicopter cabin (0) according to claim 1, wherein the observation port (4) is delimited relative to the primary structure (13) by means of a front transverse wall (43) and a rear transverse wall (43') extending at least approximately perpendicular to a longitudinal axis (L).

5. The helicopter cabin (0) according to claim 4, wherein at least a section of the front transverse wall (43) and/or the rear transverse wall (43') extends in such a way that an aperture angle (7) of at least approximately 10° is formed between the longitudinal axis (B) of the observation port and the at least one section of the respective transverse wall (43, 43').

6. The helicopter cabin (0) according to claim 1, wherein the inner window pane (15) is temporarily covered with a screen such as, for example, a roller shutter (20).

7. The helicopter cabin (0) according to claim 1, wherein the inner window pane is temporarily replaced with a floor insert (21).

8. The helicopter cabin (0) according to claim 1, wherein the outer window pane (16) is arranged flush with a plane of the skin (17) of the primary structure (13) such that the aerodynamic properties of the skin (17) remain virtually unchanged.

## Revendications

1. Cabine d'hélicoptère (0) avec un canal d'observation (4) dans une structure principale (13) de la cabine d'hélicoptère (0), le canal d'observation (4) étant disposé de manière à traverser entièrement la structure principale (13) à partir d'un fond de cabine (9) jusqu'à une enveloppe extérieure (17) de la cabine d'hélicoptère (0), et dans lequel une ouverture du canal d'observation (4) donnant sur l'espace intérieur est recouverte d'une vitre intérieure (15) et une ouverture du canal d'observation (4) donnant sur l'atmosphère est recouverte d'une vitre extérieure (16) tout en étant reliée de façon amovible ou fixe, et avec un siège de pilote (2) et un siège de copilote (3), lesquels sont disposés côte à côte dans le sens transversal de la cabine d'hélicoptère (0),
**caractérisée en ce que** le canal d'observation (4) est disposé entre le siège de pilote (2) et le siège de copilote (3), et des parois du canal d'observation (4) forment des parties de la structure principale (13).

2. Cabine d'hélicoptère (0) selon la revendication 1, dans laquelle la vitre intérieure (15) est disposée en affleurement avec le plan du fond de cabine (9).

3. Cabine d'hélicoptère (0) selon la revendication 1, dans laquelle l'ouverture du canal d'observation (4) vers l'espace intérieur s'étend le long de l'axe longitudinal (L) et la vitre intérieure (15) s'étend au moins approximativement à partir d'un panneau d'instruments (1) jusqu'à un dossier du siège de pilote (2).

4. Cabine d'hélicoptère (0) selon la revendication 1, dans laquelle le canal d'observation (4) est délimité contre la structure principale (13) par une paroi transversale avant (43) et une paroi transversale arrière (43'), en s'étendant au moins approximativement perpendiculairement à un axe longitudinal (L).

5. Cabine d'hélicoptère (0) selon la revendication 4, dans laquelle au moins une partie de la paroi transversale avant (43) et/ou de la paroi transversale arrière (43') présente un angle d'ouverture (7) d'au moins approximativement 10° entre un axe longitudinal de canal d'observation (B) et l'au moins une partie de la paroi transversale respective (43, 43').

6. Cabine d'hélicoptère (0) selon la revendication 1, dans laquelle la vitre intérieure (15) est temporairement recouverte par un cache, par exemple un volet roulant (20).

7. Cabine d'hélicoptère (0) selon la revendication 1, dans laquelle la vitre intérieure est temporairement remplacée par un insert de fond (21).

8. Cabine d'hélicoptère (0) selon la revendication 1, dans laquelle la vitre extérieure (16) est disposée en affleurement avec un plan de l'enveloppe extérieure (17) de la structure principale (13), moyennant quoi les propriétés aérodynamiques de l'enveloppe extérieure (17) restent quasiment inchangées.
